# EUROPEAN PATENT SPECIFICATION

(11) **EP 4 226 060 B1**
(45) Date of publication and mention of the grant of the patent: **29.10.2025**
(21) Application number: 21787065.8
(22) Date of filing: 30.09.2021
(51) Int. Cl.: F16C 33/20, F16C 33/26, F16C 17/04, F16C 41/00, F16C 39/02

(54) **SHOE FOR HYDRODYNAMIC BEARING AND RELEVANT MANUFACTURING PROCESS**
SCHUH FÜR HYDRODYNAMISCHES LAGER UND VERFAHREN ZU SEINER HERSTELLUNG
PATIN POUR PALIER HYDRODYNAMIQUE ET PROCÉDÉ DE FABRICATION APPROPRIÉ

(30) Priority: 05.10.2020 IT 202000023422
(43) Date of publication of application: 16.08.2023
(73) Proprietor: Eurobearings S.r.l., 29016 Cortemaggiore (PC) (IT)
(72) Inventor: RIBONI, Giacomo, 20135 Milano (MI) (IT)
(74) Representative: Iannone, Carlo Luigi
(86) International application number: PCT/IB2021/058983
(87) International publication number: WO 2022/074517

(56) References cited:
- EP-A1- 3 135 928
- EP-A1- 3 276 191
- EP-A1- 3 333 437
- WO-A1-94/07043
- CN-A- 106 523 519
- CN-A- 108 708 905
- GB-A- 627 421
- JP-A- 2004 019 857
- US-A- 4 526 482
- US-A1- 2005 260 431

## Description

The present invention relates to a shoe for hydrodynamic bearings.

The invention also relates to a process for manufacturing said shoe for bearing.

More specifically, the invention relates to a polymer-coated shoe, used in generators, turbines, pumps, transmission components.

Currently known polymer-coated bearings of this type are substantially based on a mechanical anchorage between the metal substrate and the coating polymer itself.

The solution proposed according to the present invention is in the field of hydrodynamic generator bearings, such as for example those described in patent WO 2004/001241 Al.

WO'241 describes a bearing for a rotor of a rotating machine, in particular a hydro-generator, which rotates around a vertically rotating axis. Said bearing is designed as a sliding bearing and comprises an axial bearing and a radial bearing. Normally, these bearings are coated with white metal (a tin alloy - white metal or "babbitt metal").

However, as shown in EP 3 333 437 A1 which discloses the features of the preamble of claim 1, in many cases polymer-coated bearings are used.

In shoes of the known type, sintered bronze or a welded metal mesh or a series of tiny grooves machined in the bearing support part are mainly used.

Normally, in all known types of solutions for shoes, once said intermediate layer has been created, the polymer layer is pressed into it under conditions of high temperature and high pressure.

This creates a mechanical connection between metal and polymeric materials.

This technology is characterized by a high degree of complexity, which also means high costs for the final product.

In fact, the process for obtaining known shoes involves various steps and the use of specialised equipment to manufacture the final product, which also limits the potential suppliers (in addition to the cost increase mentioned above).

A further problem with the known and currently adopted technology is that there is inevitably a limit to the size that can be processed.

Furthermore, once the components are connected, they cannot be disconnected later without destroying the connection.

The polymer layer cannot therefore be replaced if the sliding surface is damaged due to wear or bearing seizure.

A recent solution that tries to answer the above-mentioned problem is the one described in EP 3 276 191 A1. In this patent application, an attempt is made to overcome the above-mentioned disadvantages by proposing a solution for a shoe in which the polymer and the metal part are decoupled, thus creating a shoe that can also be dismounted later if necessary (e.g. due to excessive wear).

However, the solution according to EP'191 has some disadvantages, such as the need for machinings with very precise tolerances to ensure the coupling among the parts and the reduced possibility of controlling the total tolerances of the component (the shoes in the bearings have tolerances in the order of hundredths of a millimetre).

Among the known patent documents, some are mentioned in particular, which relate to the specific solution proposed according to the present invention.

WO 2013/178266 A1 describes a hydrodynamic bearing, which has a layered structure that is substantially uniform on the circumference of and comprises a base, a lead-free sliding layer having a thickness that is reduced in the edge areas compared to the central area, and a polymeric coating that is thicker in the edge areas than in the central area, so that the surface level of the coating is substantially flat as can be seen in the axial cross-section. This creates a kind of reservoir of coating material in the edge areas, which is particularly useful for the initial start-up phases of the rotating machines where wear occurs, where the bearing and the shaft adapt one another, increasing the resistance to edge seizure and achieving an improved alignment of the shaft to the bearing.

On the other hand, the patent US 6,332,716 describes a composite bearing in which a support metal is fixed to a resin layer, in which polytetrafluoroethylene (PTFE) is added to a base resin constituted essentially by polyether-ether-ketone, so that the proportion of polytetrafluoroethylene is between 0.1 and 50% by weight based on the resin layer. The polytetrafluoroethylene is then dispersed in the form of particles in the base resin.

The US patent 5,229,198 in turn describes a material for low friction bearings which includes a matrix formed by a mesh screen wire which is fused with a metal support sheet. The polytetrafluoroethylene or other polymeric resin fills the interstices inside the screen, thereby being blocked rigidly together to impart high strength to the bearing material.

Patent application US 2005/0260431 A1 describes a composite material for use in plain bearings and provides for a metal support and at least one reinforcing material having an open structure. Said support and reinforcing materials are connected through a metal connection. Patent application EP 3 276 191 A1 describes a shoe for the bearing of a hydrodynamic generator which comprises a polymeric part and a metal base, which combine to make up said shoe for bearing. Maintenance in the event of bearing failure is simplified and speeded up by the fact that the polymeric part is separated from the metal part. In particular, EP '191 proposes a resting shoe for bearing for hydrodynamic generators designed with a simplified approach compared to traditional polymer-coated shoes for bearing that allows to reduce production costs while increasing the main advantages thereof, such as high thermo-mechanical resistance and low wear in mixed lubrication. This is a bearing shoe of a hydrodynamic generator which has a polymeric part and a metal base, combined to form the bearing shoe. The shoe is characterized in that the polymeric part is a separate polymeric plate, the metal base is a support plate, and the polymeric plate is fixed to the support plate but is also removable.

According to EP'191, the polymeric plate is fixed in the resting plate by means of a seat in the resting plate that fits perfectly with the seat in the polymeric plate, the latter providing both the seat and an offset that protrudes from the plate on the perimeter forming a sealing strip with reduced thickness. The polymeric plate and the support plate have or may have the same edge contour. Again according to EP'191, the support plate and the polymeric plate may be coupled with at least one bolt. Furthermore, in the solution proposed in EP'191, locking means may be provided at the edge of the polymeric plate, which interact with the side wall of the pocket of the resting plate. In particular, said locking means may comprise a key and a slotted joint that extend along the edge of the polymeric plate, and a removable fixing plate may be provided on one side of the support bearing, to allow the polymeric plate to be inserted from one side by sliding it inwards and then, when closed, to be able to fix the polymeric plate in the pocket in its sliding position. The fixing plate can be fixed to the resting plate by means of fixing screws. In one example reported in EP'191, the polymeric part is at least partially constituted by polyetheretherketone (PEEK) .

It is well known that PEEK is a material with advantageous properties in terms of strength, which make it better than other polymers. The polymer could also be constituted least partly by polytetrafluoroethylene (PT-FE).

Finally, according to EP'1919, the polymeric part may be constituted by a composition of different polymers and by a filler constituted by carbon fibers and/or graphite. EP'919 constitutes the major prior art document relevant to the invention described herein.

The solution proposed in accordance with the present invention, which proposes a bearing shoe consisting of a polymeric part and a metal base joined in an innovative manner that can significantly reduce costs by simplifying the production process, fits into this context.

According to the invention, the solution makes it possible to achieve considerable improvements in the operation of the component by increasing the component's yielding at the most loaded points of the shoe. In addition, improvements in the operation of the component are also made possible by introducing sensors underneath the polymeric layer to monitor its behaviour.

These and other results are obtained with a shoe for hydrodynamic bearing comprising the features described in independent claim 1.

Further features of the shoe according to the invention are described in the dependent claims.

The present invention will now be described, by way of a non-limiting illustrative example, according to preferred embodiments thereof, with particular reference to the figures in the fixed drawings wherein:
Figure 1 is a perspective view of a shoe for bearing;
Figure 2 is a close-up sectional view of the shoe in Figure 1;
Figure 3 shows a detail of the shoe of Figure 1;
Figure 4 shows a perspective view of a an embodiment of the metal base of the shoe for bearing according to the invention;
Figure 5 shows a perspective view of a second embodiment of the polymeric part of the shoe for bearings according to the invention;
Figure 6 shows a perspective view of the two elements shown in Figures 4 and 5;
Figure 7 shows a detail of the shoe in Figure 6;
Figure 8 shows the trends of the pressure loads of the bearing of the embodiment of Figures 5, 6 and 7;
Figure 9 is an exploded perspective view of an example of a shoe not part of the invention;
Figure 10 shows a perspective view of the metal base of another example of the shoe not part of the invention;
Figure 11 is a sectional view of the base of Figure 10;
Figure 12 shows a perspective view of the metal base of another example of the shoe not part of the invention;
   and
Figure 13 is a sectional view of the base of Figure 12. Referring now to the figures in the drawings, and in particular initially to Figures 1 - 3, a resting shoe for bearing is shown, generically indicated by the numerical reference 10, in particular a hydrodynamic generator bearing, comprising a polymeric part 1 and a metal base 2.

In the embodiment of the shoe 10 according to the invention, it provides that the polymeric part 1 is constituted by a polymeric plate cast on the metal base 2, which constitutes a support plate.

The solution according to the invention proposes to cast (in the preferred embodiment described, 3D printing, but this technology must in no way be construed as limiting the scope of the invention) one or more layers of polyetheretherketone (hereinafter also indicated with the initials PEEK) reinforced with carbon fibers or graphite on the metal base 2. The use of PEEK is not to be understood as limiting the scope of protection of the invention; for example, the polymeric material may be constituted by other polymers, such as polyethylene terephthalate PTFE, or a mixture thereof. In fact, the polymeric element can also be made, for example, of PTFE or a mixture of PEEK and PTFE, with the addition of carbon fiber or graphite.

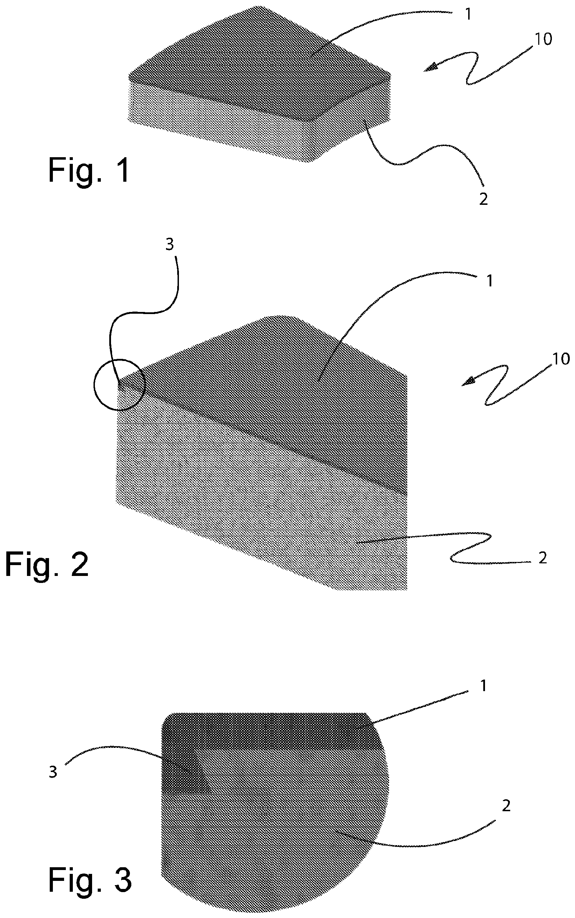

The metal base 2 is processed, with the creation of undercut 3, along at least one of the sides delimiting the perimeter of the metal base 2 (the geometry of the undercut 3 is shown in detail in Figure 3).

With the construction of the undercuts 3, it is not possible to apply the techniques for example described in the Technical Document EP'191 as it would not be possible for a polymeric plate to slide freely in the undercuts 3.

In addition, it is not possible to use the hot-pressing technique inherent in some solutions of the known technique.

The undercuts 3 provided in this embodiment of the shoe 1 according to the invention for the coupling between polymeric part 1 and base 2, have depths in the order of millimetres and therefore it would not be possible to obtain a correct anchorage of the polymeric plate pressed on top by heat.

The undercuts 3, and the distribution thereof, are only one example of the coupling means that can be provided in the shoe 10 according to the invention, as will also be seen below.

The solution proposed according to the present invention allows for a polymeric part 1 anchored to the metal base 2 directly on the base itself.

This process can be carried out by using machinery to deposit molten polymers on a metal surface, which allow the undercuts to be filled and then the polymeric part 1 to be anchored on the metal base 2.

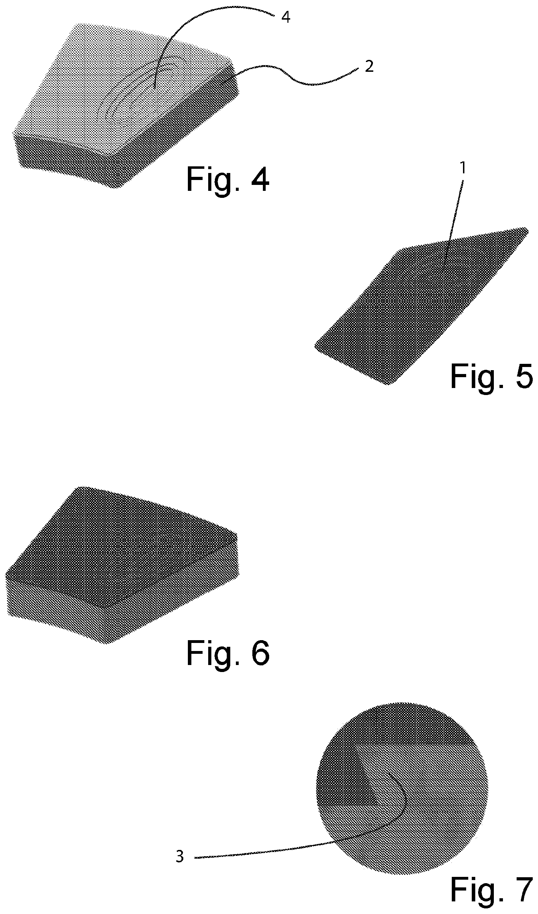

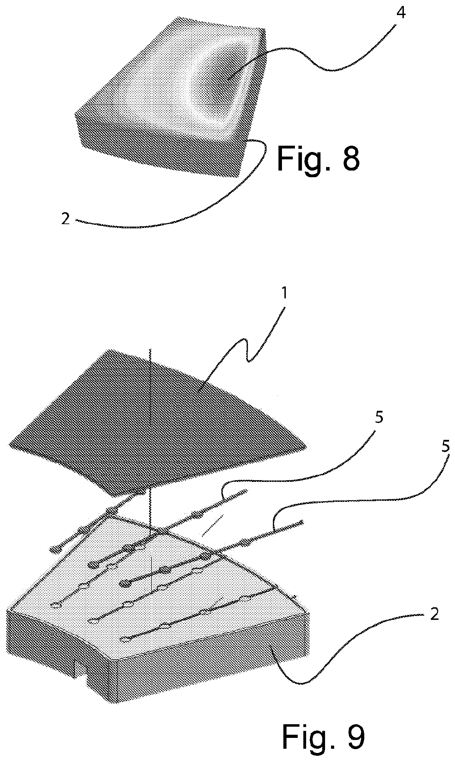

The solution proposed according to the invention provides significant advantages over currently known solutions, and in particular:
- reduction in the production costs of polymer-coated guide and thrust bearings, due to less material wastage and a decidedly less demanding need for precise machining for the coupling between polymer and metal, as tight tolerances are not required to execute undercuts 3, which will be filled totally or partially (in any case sufficiently) to ensure the anchorage between polymer and metal support:
- possibility of decoupling the polymeric part 1 and the metal base 2 by making cuts along specially created seats in the metal support. In this way it is possible to reuse the metal base 2, the metal support to create a new shoe 10, should the latter become damaged or need replacing;
- possibility of providing further machining inside the metal base 2 which would further promote both the anchorage of the polymeric part 1 to the base 2 and the operation of the bearing 10 as a whole. In fact, by increasing the thickness of the polymeric material in the areas that are subject to higher pressures during operation, according to the invention, it is possible to exploit the yielding of the material itself, and in particular of PEEK, to favour a better distribution of pressure on each single shoe 10. This advantage is illustrated in Figures 4 to 8 of the drawings, in which a cavity 4 is provided on the metal base 2 with steps progressively descending towards the centre of the cavity 4. Figure 8 shows the effects obtained with this embodiment in the pressure relief;
- possibility of introducing sensors 5 inside the shoes 10 between the PEEK part 1 and the metal base 2, to monitor both the operating conditions and the state of health of the same. This type of embodiment is illustrated in Figure 9.

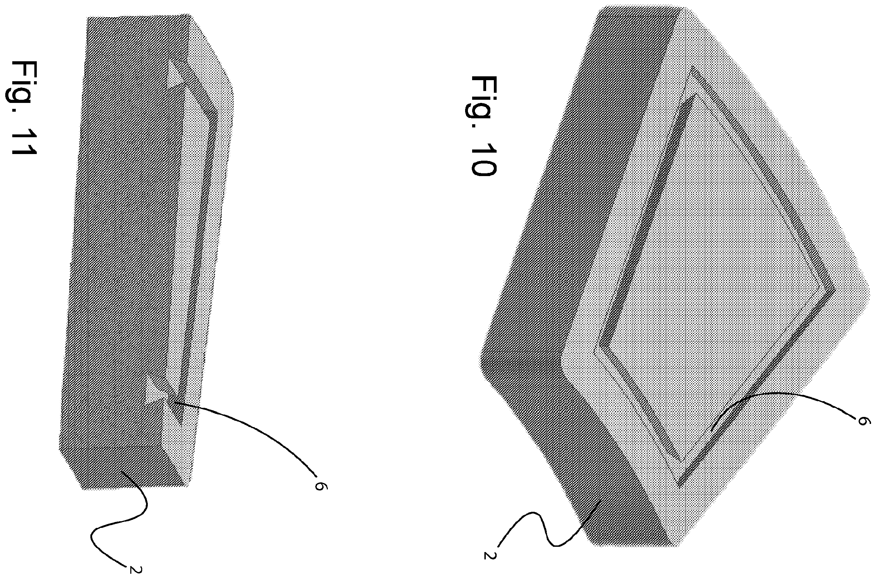

Coming now to the observation of Figures 10 and 11, a further example of the shoe 10 not part of the invention is shown, in which on the base element 2 a groove 6 is formed, in which, when the polymeric material of the element 1 is cast, a coupling is created between the elements 1 and 2.

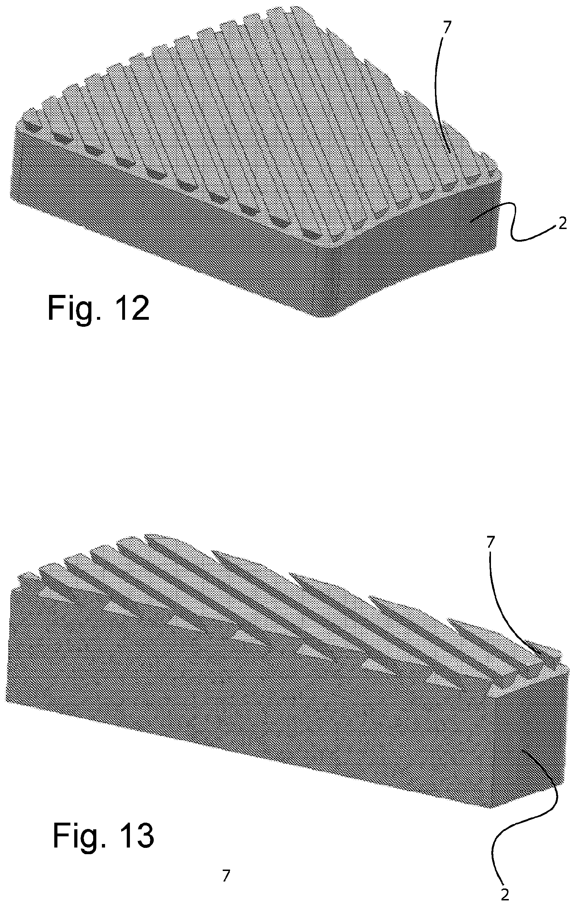

In Figures 12 and 13, grooves 7 are made on the base element 2 in which, when the polymeric material of the element 1 is cast, a coupling is created between the elements 1 and 2.

The present invention has been described in the foregoing according to its preferred embodiments, but it is to be understood that they may be modified by experts in the art, without thereby departing from the scope of protection thereof, as defined in the appended claims.

## Claims

1. Shoe (10) for a hydrodynamic bearing, said shoe (10) being **characterized by** providing a polymeric material part (1) and a support base (2) in metal material,
said support base (2) providing coupling means (3; 6; 7);
said polymeric part (1) being cast on said base (2), so as to also fill said coupling means (3; 6; 7) provided on said base (2), obtaining a firm coupling and a shape complementary to that of the base (2); **characterized in that** on the surface of said metal base (2) on which the polymeric material is poured, at least one cavity (4) is realized in correspondence with the areas in which the bearing is subject to higher pressures; said cavity (4) being stepped with steps progressively descending towards the centre of the cavity (4).

2. Shoe (10) according to claim 1, **characterized in that** said coupling means (3; 6; 7) are provided on the perimeter of and/or internally on said base (2).

3. Shoe (10) according to claim 1 or 2, **characterized in that** said coupling means are constituted by one or more undercuts (3), and/or by grooves or hollows (6; 7).

4. Shoe (10) according to one of the preceding claims, **characterized in that** said polymeric part (1) is made of polyetheretherketone (PEEK), PTFE or a mixture thereof, with the addition of carbon fiber or graphite.

5. Shoe (10) according to one of the preceding claims, **characterized in that** said metal base (2) is made of steel, aluminum, copper or other metal or metal alloys.

6. Shoe (10) according to one of the preceding claims, **characterized in that** between said metal base (2) and said polymeric part (1) one or more sensors (5) are provided for measuring one or more parameters of the shoe (10).

7. Process for manufacturing a shoe (10) according to any one of claims 1 to 6, **characterized in that** the polymeric material of the part (1) is cast on the metal base (2).

## Patentansprüche

1. Schuh (10) für ein hydrodynamisches Lager, wobei der Schuh (10) **dadurch gekennzeichnet ist, dass** er einen Polymermaterialteil (1) und eine Trägerbasis (2) aus Metallmaterial bereitstellt,
wobei die Trägerbasis (2) Kupplungsmittel (3; 6; 7) bereitstellt,
wobei der Polymerteil (1) auf die Basis (2) gegossen ist, sodass auch die auf der Basis (2) bereitgestellten Kupplungsmittel (3; 6; 7) gefüllt sind, wodurch eine feste Kupplung und eine Form, die zu der der Basis (2) komplementär ist, erhalten werden,
**dadurch gekennzeichnet, dass** auf der Oberfläche der Metallbasis (2), auf die das Polymermaterial gegossen ist, mindestens ein Hohlraum (4) in Übereinstimmung mit den Bereichen, in denen das Lager höheren Drücken ausgesetzt ist, ausgebildet ist, wobei der Hohlraum (4) mit Stufen abgestuft ist, die progressiv hinführend zur Mitte des Hohlraums (4) abfallen.

2. Schuh (10) nach Anspruch 1, **dadurch gekennzeichnet, dass** die Kupplungsmittel (3; 6; 7) auf dem Umfang und/oder innenseitig auf der Basis (2) bereitgestellt sind.

3. Schuh (10) nach Anspruch 1 oder 2, **dadurch gekennzeichnet, dass** die Kupplungsmittel aus einer oder mehreren Hinterschneidungen (3) und/oder aus Rillen oder Vertiefungen (6; 7) gebildet sind.

4. Schuh (10) nach einem der vorhergehenden Ansprüche, **dadurch gekennzeichnet, dass** der Polymerteil (1) aus Polyetheretherketon (PEEK), PTFE oder einer Mischung davon unter Zusatz von Kohlenstofffasern oder Graphit besteht.

5. Schuh (10) nach einem der vorhergehenden Ansprüche, **dadurch gekennzeichnet, dass** die Metallbasis (2) aus Stahl, Aluminium, Kupfer oder einem anderen Metall oder Metalllegierungen besteht.

6. Schuh (10) nach einem der vorhergehenden Ansprüche, **dadurch gekennzeichnet, dass** zwischen der Metallbasis (2) und dem Polymerteil (1) ein oder mehrere Sensoren (5) zum Messen eines oder mehrerer Parameter des Schuhs (10) bereitgestellt sind.

7. Verfahren zur Herstellung eines Schuhs (10) nach einem der Ansprüche 1 bis 6, **dadurch gekennzeichnet, dass** das Polymermaterial des Teils (1) auf die Metallbasis (2) gegossen ist.

## Revendications

1. Patin (10) pour un palier hydrodynamique, ledit patin (10) étant **caractérisé par** la fourniture d'une pièce (1) en matériau polymère et une base de support (2) en matériau métallique,
ladite base de support (2) fournissant des moyens de couplage (3; 6; 7);
ladite pièce de polymère (1) étant coulée sur ladite base (2), de manière à remplir également lesdits moyens de couplage (3; 6; 7) prévus sur ladite base (2), en obtenant un couplage ferme et une forme complémentaire à celle de la base (2);
**caractérisé en ce que** sur la surface de ladite base métallique (2) sur laquelle le matériau polymère est versé, au moins une cavité (4) est réalisée en correspondance des zones dans lesquelles le palier est soumis à des pressions plus élevées; ladite cavité (4) étant réalisée en escalier avec des échelons descendant progressivement vers le centre de la cavité (4).

2. Patin (10) selon la revendication 1, **caractérisé en ce que** lesdits moyens de couplage (3; 6; 7) sont prévus sur le périmètre et/ou à l'intérieur de ladite base (2).

3. Patin (10) selon la revendication 1 ou 2, **caractérisé en ce que** lesdits moyens de couplage sont constitués par une ou plusieurs contre-dépouilles (3), et/ou par des rainures ou des creux (6; 7).

4. Patin (10) selon l'une des revendications précédentes, **caractérisé en ce que** ladite pièce de polymère (1) est constituée de polyétheréthercétone (PEEK), de PTFE ou d'un mélange de ceux-ci, avec l'ajout de fibres de carbone ou de graphite.

5. Patin (10) selon l'une des revendications précédentes, **caractérisé en ce que** ladite base métallique (2) est en acier, en aluminium, en cuivre ou en un autre métal ou alliage de métaux.

6. Patin (10) selon l'une des revendications précédentes, **caractérisé en ce qu'**entre ladite base métallique (2) et ladite pièce de polymère (1), un ou plusieurs capteurs (5) sont prévus pour mesurer un ou plusieurs paramètres du patin (10).

7. Procédé de fabrication d'un patin (10) selon l'une quelconque des revendications 1 à 6, **caractérisé en ce que** le matériau polymère de la pièce (1) est coulé sur la base métallique (2).
